# EUROPÄISCHE PATENTSCHRIFT

(11) **EP 1 688 814 B1**
(45) Veröffentlichungstag und Bekanntmachung des Hinweises auf die Patenterteilung: **20.08.2008**
(21) Anmeldenummer: 06101083.1
(22) Anmeldetag: 31.01.2006
(51) Int. Cl.: G05D 16/10, B67D 1/04

(54) **Druckminder- und Regulierventil mit Anstechmechanismus einer im Fassverschluss montierbaren Gaspatrone**
Pressure reducing and regulating valve comprising puncturing mechanism for a pressurised gas cartridge attachable under a container cover
Soupape de réduction de pression et de régulation de pression pourvue d'un mécanisme de perçage pour une cartouche de gaz comprimé pouvant être fixée au-dessous d'un couvercle de récipient

(30) Priorität: 02.02.2005 EP 05002203
(43) Veröffentlichungstag der Anmeldung: 09.08.2006
(60) Teilanmeldung: 08102187.5
(73) Patentinhaber: Impress GmbH & Co. oHG, 38723 Seesen (DE); Fass-Frisch GmbH, 75056 Sulzfeld (DE)
(72) Erfinder: Sauer, Hans Peter, 56218 Muelheim-Kärlich (DE); Neukirch, Werner, 56626 Andernach (DE); Grittman, Guenther, 75031 Eppingen - Muehlbach (DE)
(74) Vertreter: Olgemöller, Luitgard Maria

(56) Entgegenhaltungen:
- EP-A- 1 642 862
- WO-A-89/00544
- US-A- 3 327 899
- US-A- 5 894 869
- PATENT ABSTRACTS OF JAPAN Bd. 018, Nr. 090 (M-1560), 15. Februar 1994 (1994-02-15) & JP 05 296397 A (NIPPON TANSAN GAS CO LTD), 9. November 1993 (1993-11-09)

## Beschreibung

Die vorliegende Erfindung betrifft ein als Einwegteil vorgesehenes Druckminder- und Regulierventil, das eine Anstechspitze aufweist. Das Ventil wirkt im Gebrauch mit einer Druckgaspatrone, z.B. einer Kohlendioxid-Patrone zusammen, um den Gasdruck in einem Behälter, beispielsweise in einem Flüssigkeitsgebinde wie einem größeren oder kleineren Bierfass, aufrecht zu erhalten, derart, dass unabhängig von der noch im Behälter befindlichen Flüssigkeit ein Gasdruck vorhanden ist, der zum einen ausreicht, um Getränk auch bei relativ wenig Restflüssigkeit im Behälter zu zapfen und der zum anderen das zu zapfende Getränk frisch hält. Die Aufrechterhaltung eines solchen Gasdruckes ermöglicht es darüber hinaus, die Zapfarmatur in beliebiger Höhe anzuordnen. Zusätzlich kann dieses Ventil eine oder mehrere weitere Einheiten umfassen: Mindestens eine Sicherheitsventileinheit kann vorgesehen sein, um bei einem fehlerhaft auf zu hohe Werte angestiegenen Überdruck im Ventil Gas ins Freie zu entlassen. Eine Rückschlagventileinheit kann verhindern, dass der in der Dose herrschende Druck und mit diesem Flüssigkeit in den Ventilbereich gelangt. Selbstverständlich kann das erfindungsgemäße Ventil auch für andere Verwendungszwecke eingesetzt werden.

Bier wird heute unter anderem in kleinen Metallfässchen von z.B. 5 I Fassungsvermögen angeboten. Diese Fässchen besitzen in einem unteren Bereich der Seitenwand einen integrierten Zapfhahn, der vor dem ersten Gebrauch in das Gebinde eingeschoben ist. Im Deckel befindet sich ein Belüftungsventil, das in der Regel im Füllloch der Dose sitzt.

Wenn das Bier in einem solche Fässchen zur Neige geht, beginnt es, schal zu werden, da der Druck im Gebinde abfällt. Um dem entgegenzuwirken, ist bereits ein Belüftungsventil entwickelt worden, auf das sich bei Bedarf eine Anstech- und Zapfarmatur mit Kohlensäurepatrone aufsetzen lässt. Ein solches Ventil ist z.B. in der DE 199 52 473 beschrieben.

Die bis heute bekannten Kohlensäure-Anstech- und -Zapfgeräte sind Mehrweggeräte. Die Zapfarmatur wird mittels Spannbügel auf dem Faß festgeklemmt, und die außensitzende Gaspatrone, eine CO₂-Patrone, wird mit Hilfe des Patronenhalters angestochen. Die Patrone wird dabei zur Anstechspitze des Ventils beweg. Nach jeder Benutzung muss das Gerät aufwendig gereinigt werden. Es ist außerdem groß und kostenintensiv, so dass sich eine Person, die nur gelegentlich einmal ein Bierfässchen in der genannten Größe anstechen möchte, genau überlegen wird, ob sich der Kauf lohnt.

Aus der WO 89/00544 ist ein Getränkebehälter mit einer Ventileinheit bekannt, der einen Patronen- und Ventilhalter, eine Anstechspitze zum Anstechen einer CO₂-Patrone sowie eine Druckminderventileinheit und einen Druckregulierraum aufweist. Diese Einheit benötigt in Kombination mit den weiteren erforderlichen Komponenten für das Zapfen von Flüssigkeit sehr viel Raum, weil das aus der Patrone strömende Gas oberhalb des Getränkebehälters in einen aufgesetzte Außenraum geleitet wird, der seinerseits in gasdurchlässiger Verbindung mit dem Innenraum des Getränkebehälters steht. Notwendigerweise muss daher dieser äußere Raum über ein zweites Gehäuse gegen die Umgebung des Getränkebehälters abgedichtet sein. Innerhalb dieses zweiten Gehäuses ist ein relativ großer Raum für die Führung eines Flüssigkeitsschlauchs aus dem Getränkebehälter heraus zu einem außen liegenden Abgassystem vorgesehen, das seinerseits seitlich aus dem Getränkebehälter vorsteht.

Die vorliegende Erfindung will hier Abhilfe schaffen und eine Ventileinheit für ein Zapfsystem bereitstellen, mit der einerseits der Druck innerhalb des Gebindes auch bei niedrigem Füllstand an Getränk auf einem Niveau gehalten werden kann, der das Zapfen von frisch schmeckendem, kohlensäurereichem Bier oder dergleichen gewährleistet, die aber andererseits wenig Raum außerhalb des Gebindes einnimmt.

Diese Aufgabe löst die vorliegende Erfindung, indem sie eine Ventileinheit gemäß Anspruch 1, insbesondere in den Ausgestaltungen der Ansprüche 2 bis 5 und 6 bis 8, bereitstellt. Zusätzliche Elemente der Ventileinheit können gemäß den Ansprüchen 9 bis 17 vorgesehen sein.

Die erfindungsgemäße Ventileinheit eignet sich in Kombination mit einer Druckquelle, z.B. einer Kohlendioxid-Patrone, als Einwegteil für insbesondere kleinere Gebinde mit kohlensäurehaltigen Getränken oder dgl. und hier ganz besonders für Bier. Erfindungsgemäß wird ein Ventil mit den folgenden Funktionen bereitgestellt: Es soll in der Lage sein, die Druckquelle für die Aufrechterhaltung des Drucks im Gebinde anzustechen, deren Druck ggf. in geeigneter Weise zu mindern, und den Druck innerhalb des Gebindes zu regulieren. In einer bevorzugten Ausgestaltung der Erfindung soll die Ventileinheit zusätzlich eine Sicherheitsventil-Funktion erfüllen können, falls der Druck in der Ventileinheit, teils auch im Gebinde, zu hoch werden sollte.

Das erfindungsgemäße Ventil kann in Kombination mit einem üblichen Zapfhahn, beispielsweise einem Einmal-Zapfhahn, wie er aus der DE 198 35 569 oder der DE 198 25 929 A1 bekannt ist, insbesondere aber mit einer Anordnung gemäß EP 04 01 4958.5 an einer Dose angebracht werden. Dabei kann es in ein mittiges Spund- oder Einfüllloch der Dose eingesetzt werden; vorzugsweise wird es jedoch exzentrisch in den Stirnseiten-Deckel der Dose eingesetzt, damit der Zapfhahn, der sich gemäß EP 04 01 4958.5 ja relativ weit oben in der Seitenwand des Gebindes befinden kann, nicht durch die mit der Ventileinheit verbundene, nach innen ragende Patronenschutzhülle behindert wird, bzw. umgekehrt. Letzteres ist jedoch nicht zwingend. Der Zapfhahn kann bei Bedarf mit einem Kompensatorsystem ausgestattet sein, mit dem der Zapfdruck gegenüber dem Innendruck reduziert und feinreguliert werden kann.

Erfindungsgemäß ist es in einer ersten Ausgestaltung der Erfindung möglich, dass bereits bei der Montage der Ventileinheit im Deckel und ihrem Zusammenbau mit dem Patronenschutzgehäuse die darin befindliche Gaspatrone angestochen wird. In diesem Falle dringt aus der Patrone austretendes Gas bis in einen Druckraum vor, wobei der sich dabei aufbauende Druck dazu genutzt wird, diesen Raum über ein Ventil (in Form eines Reduzierventils) abzudichten, bis die Ventileinheit betätigt wird. Die Betätigung erfolgt bei Bedarf von außen derart, dass das genannte Dichtungsventil gegen die Kraft, die der Gasdruck ausübt, geöffnet wird, so dass Gas aus dem Druckraum in einen Druckregulierraum eindringen kann. Ein Federsystem sorgt dafür, dass anschließend die Druckverhältnisse in den beiden Räumen derart gegeneinander ausbalanciert sind, dass im Innern der Ventileinheit ein Druck von ca. 1,0 bis 1,5 bar eingestellt ist. Ist dieser Druck erreicht, schließt sich das Reduzierventil wieder. Herrscht im Inneren der Ventileinheit ein höherer Druck als im Innenraum des Flüssigkeitsgebindes, kann Gas aus der Ventileinheit in den Gebinde-Innenraum austreten. Falls jedoch der Druck im Inneren des Flüssigkeitsgebindes höher ist als in der Ventileinheit, verhindert ein Rückschlagventil, dass Flüssigkeit aus dem Hauptraum des Gebindes in den Druckregulier-Raum der Ventileinheit eindringt.

Alternativ kann das Anstechen der Patrone in einer zweiten Ausgestaltung der Erfindung von außen erst zu dem Zeitpunkt bewirkt werden, ab dem eine Kompensation des Druckabfalls im Flüssigkeitsbehälter nötig wird. Eine Aktivierung der Ventileinheit bewirkt dann vorzugsweise gleichzeitig das Anstechen der Patrone und die Einstellung des Dichtungsventils auf die oben erwähnte Druck-Balance. Auch in dieser Ausgestaltung ist es möglich, ein Rückschlagventil vorzusehen. Statt dessen oder zusätzlich kann jedoch vorgesehen sein, dass das Anstechen der Patrone über ein hülsenartiges Innengehäuse erfolgt, dessen Drehbewegung zu einer axialen Bewegung einer mit ihm verbundenen Anstechspitze in Richtung der Mündung der Gaspatrone führt. In diesem Falle kann das Vorhandensein eines drehbaren Innengehäuses im äußeren Gehäuse der Ventileinheit dazu genutzt werden, dass nur dann, wenn die Gaspatrone angestochen wird bzw. wurde, Gas aus dem Druckregulier-Raum austreten kann, beispielsweise, weil nur nach dieser Drehbewegung Öffnungen in der Seitenwand des Innengehäuses und im äußeren Gehäuse der Ventileinheit übereinander zu liegen kommen, so dass Gas in den Innenraum des Gebindes austreten kann.

Die erfindungsgemäße Ventileinheit kann auf beliebige Weise dichtend in einer entsprechenden Öffnung des Flüssigkeitsbehälters befestigt sein. Diese Öffnung findet sich vorzugsweise exzentrisch im Deckelbereich des Flüssigkeitsbehälters. Beispielsweise kann der obere Endbereich des Ventilhalters der Ventileinheit mit einem Belüftungsventilstopfen verbunden sein, der neben der Befestigungs- und Dichtfunktion außerdem Betätigungsmittel dafür besitzt, eine Kraft ins Innere der Ventileinheit zu übertragen, die das Dichtungsventil des Druckraums wie oben erwähnt gegen den Gasdruck öffnet, wenn dieser Belüftungsventilstopfen in Kombination mit der oben erwähnten ersten Ausgestaltung der Erfindung eingesetzt wird. Statt dessen kann er auch mit Mitteln versehen sein, die das Anstechen der Gaspatrone gemäß der erwähnten zweiten Ausgestaltung der Erfindung erst nach der vollständigen Montage und dem Verschließen des Flüssigkeitsbehälters ermöglichen. Der Belüftungsventilstopfen kann Abmessungen und Dichtungsflächen/Rastkrallen derart besitzen, dass er als Abdichtstopfen für die erfindungsgemäße Ventileinheit dient, mit der diese in der Öffnung des Flüssigkeitsbehälters verankert ist. Statt der Verwendung eines Belüftungsventilstopfens kann die Ventileinheit auch direkt mit Hilfe von Dichtmitteln in die Öffnung des Flüssigkeitsbehälters eingesetzt sein.

Es ist in jedem Falle vorteilhaft, wenn die erfindungsgemäße Ventileinheit zumindest ein Sicherheitssystem aufweist, mit dessen Hilfe ein zu hoher Druck im Druckregulier-Raum abgebaut werden und nach außen, in die Umgebung des Flüssigkeitsbehälters, abgegeben werden kann. Dieses System kann im Falle der genannten zweiten Ausgestaltung der Erfindung auch Überdruck im Flüssigkeitsgebinde ableiten. Ist ein Rückschlagventil vorhanden, ist dies jedoch nicht erforderlich. Wünschenswert kann darüber hinaus ein zusätzliches, zweites Sicherheitssystem sein, das bei Dichtungsproblemen in unmittelbarer Nähe der Anstechspitze einen unerwünschten Überdruck aus den dort vorhandenen Räumen heraus- und nach außen leitet.

Anhand der Figuren soll die Erfindung näher erläutert werden, worin:
Figur 1 ein Flüssigkeitsgebinde mit einer ersten Ausgestaltung der erfindungsgemäßen Ventileinheit zeigt, die mit einer in einem Patronenschutzgehäuse 3 befindlichen CO₂₋Druckpatrone verbunden ist und exzentrisch im Deckel des Gebindes angebracht ist, so dass ausreichend Platz für die Anordnung eines Zapfhahns mit Steigrohr bleibt,
Figur 2 eine zweite Ausgestaltung der erfindungsgemäßen Ventileinheit in einer Figur 1 ähnlichen Ansicht zeigt,
die Figuren 3 und 4 Übersichten über die verschiedenen Teile der in den Figuren 2 und 1 dargestellten Ausführungsformen der Ventileinheit zeigen, die diese erfindungsgemäß umfassen können, wobei jeweils ein Zustand nach der Montage und dem Verschließen des mit Flüssigkeit gefüllten Gebindes, aber vor der Betätigung der Ventileinheit gezeigt ist;
Figur 5 die Ventileinheit gemäß Figur 1 in aktiviertem Zustand zeigt,
in Figur 6 Einzelheiten der in Figur 2 gezeigten Ausführungsform der erfindungsgemäßen Ventileinheit bezeichnet sind,
und die Figuren 7 und 8 die axiale Bewegung des Innengehäuses und der Anstechspitze der in Figur 2 gezeigten Ausführungsform illustrieren, wobei Figur 7 die Ventileinheit in einer Stellung zeigt, in der die Anstechspitze den Verschluss der Gaspatrone noch nicht durchstoßen hat, sich aber in Axialrichtung bereits ein kleines Stück nach unten bewegt hat, und Figur 8 diese Ventileinheit in arretierter Stellung zeigt, in der die Anstechspitze den Verschluss der Gaspatrone bereits durchstoßen hat.

Gleiche Bezugsziffern sind für die gleichen Elemente aller Figuren und Ausgestaltungen verwendet.

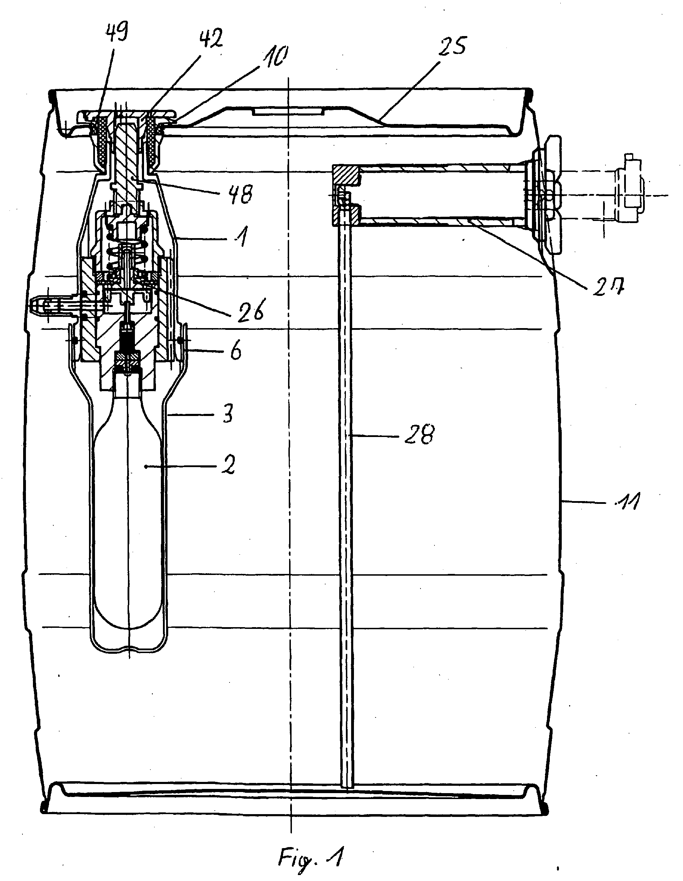

In Figur 1 erkennt man eine erfindungsgemäße Ventileinheit 26 mit einem Patronen-und Ventilhalter 1, dessen obere Verlängerung mit Einrastkrallen in eine Ausnehmung (einen Außenkäfig) eines Belüftungsventilstopfens eingreift. Der Belüftungsventilstopfen ist in einigen Teilen analog dem Stopfen aufgebaut, der aus der DE-Patentschrift 199 52 473 C2 bekannt ist. So besitzt er seitliche Dichtflächen 49, mit denen er in der exzentrischen Öffnung 10 im Deckel 25 des Getränkebehälters 11 verankert ist, sowie einen Drehdeckel 42 mit Anstechlasche. Der Drehdeckel besitzt eine zentrisch angeordnete Drehdeckelaufnahme, in die eine Anstechschraube 48 eingeschoben ist. Das Belüftungsventil ragt nur wenig über den Deckelspiegel hinaus und ist nicht höher als der Deckelrand, so dass es eine Stapelung von Behältern aufeinander nicht behindert.

Innenseitig des Behälters ist ein Patronenschutzgehäuse 3 am Ventilhalter 1 befestigt, in das eine Patrone 2 eingesetzt werden kann. Aus der Figur 1 ersieht man weiterhin die Anordnung eines Zapfhahns 27 mit Steigrohr 28. Weil mit Hilfe der Ventileinheit immer ein ausreichender Druck im Behälter 11 aufrechterhalten werden kann, ist es nicht erforderlich, dass sich der Zapfhahn in der Nähe des Bodens befindet; statt dessen kann er weit oben angebracht sein, um das Zapfen zu erleichtern, wie in der EP 04 01 4958.5 beschrieben. Die Flüssigkeitszufuhr erfolgt dabei über ein Steigrohr 28.

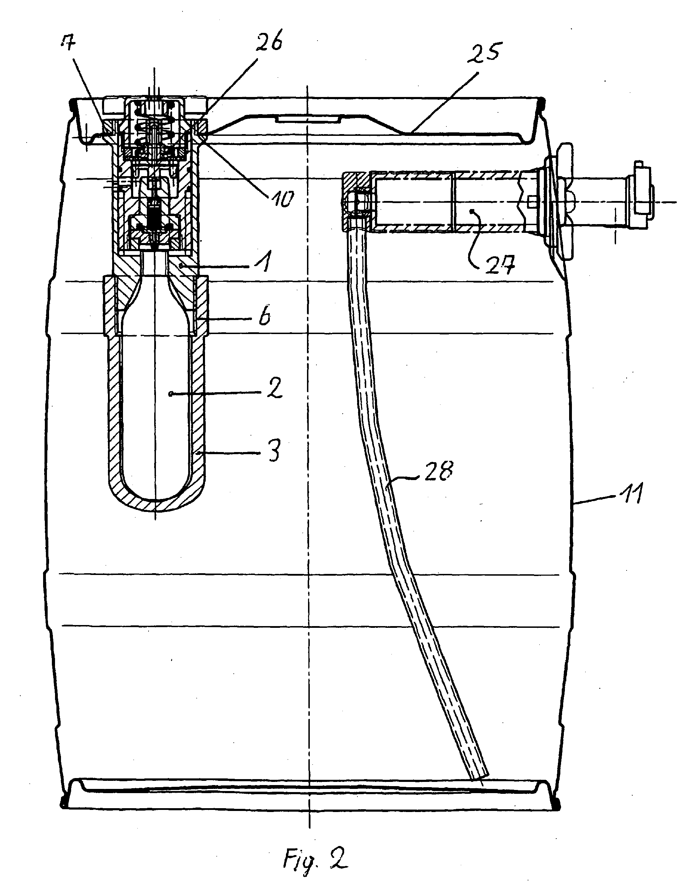

In Figur 2 ist eine alternative Ventileinheit 26 gezeigt, die ebenfalls in eine runde, exzentrische Öffnung 10 im Deckel 25 des Behälters 11 eingesetzt ist. Auch hier ragt die Ventileinheit nur wenig über den Deckelspiegel hinaus, weil sie mit ihrem äußeren Gehäuse, dem Ventilhalter 1, fest und über ein Dichtungsmittel 7 dichtend in der Öffnung 10 sitzt. Die Arretierung kann auf bekannte Weise erfolgen. Dies kann z.B. mit Hilfe eines Gewinderings sein, der in ein Außengewinde des Patronen- und Ventilhalters 1 eingreift, derart, dass die Wandung des Behälterdeckels zwischen diesem Ring und einem Vorsprung des Patronen- und Ventilhalters 1 festgeklemmt werden kann. Stattdessen kann der Ventilhalter 1 zwei umlaufende Flansche oder Rastkeil-Kränze tragen, zwischen denen sich ein Dichtungsring befindet. Beim Verrasten des Ventilhalters in der dafür vorgesehenen Öffnung des Gebindes kommen die Ränder dieser Öffnung auf der Dichtung zu liegen und werden von den Flanschen oder den Rastkeil-Kränzen gehalten.

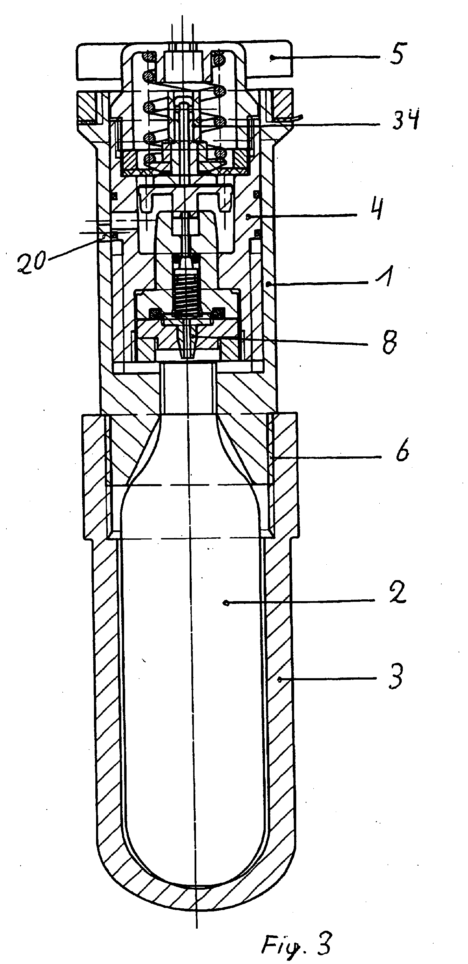

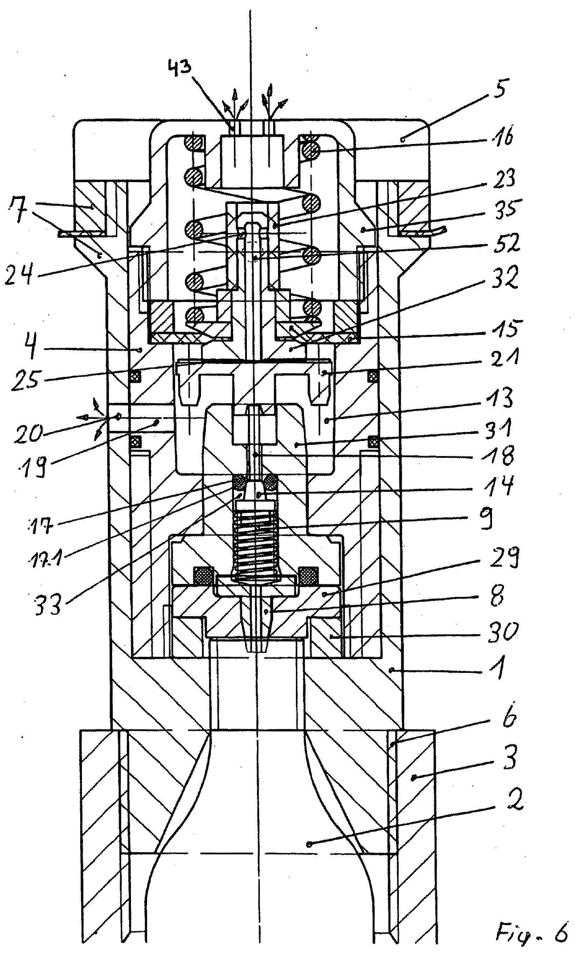

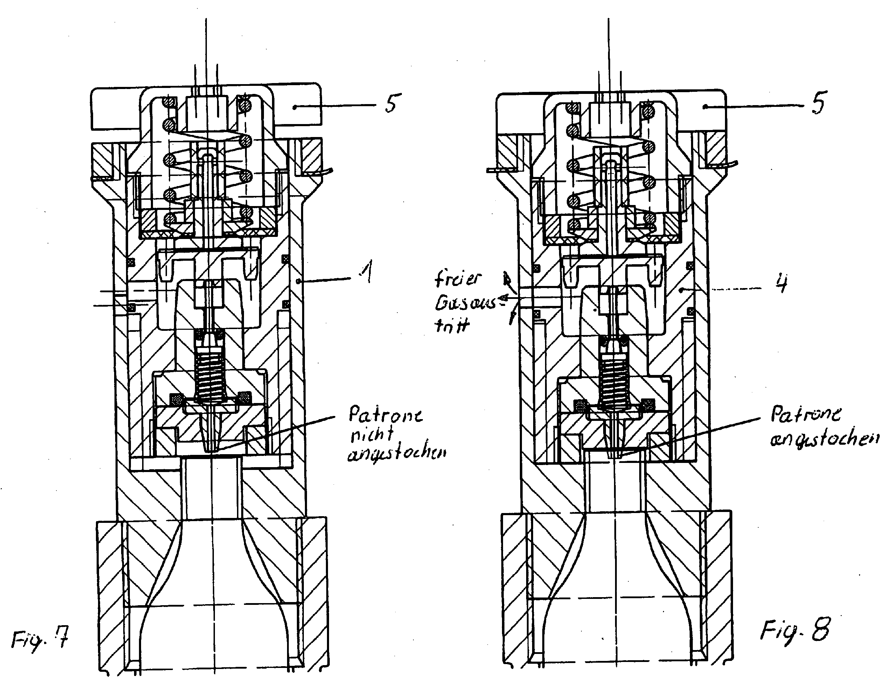

Figur 3 zeigt die erfindungsgemäße Ventileinheit 26 gemäß Figur 2 in Kombination mit einem Patronenschutzgehäuse 3 mit darin befindlicher Patrone 2 in zusammengebautem Zustand nach Montage im Flüssigkeitsbehälter-Deckel. Der Patronen- und Ventilhalter 1 verfügt über einen Anstechhebel 5 mit Originalitätssicherung, ein Sicherheitsventil 34, ein in einem Innengehäuse 4 befindliches Druckminderventil und eine Anstechspitze 8. Die Anstechspitze befindet sich noch oberhalb der Gaspatronen-Anstichstelle; erst wenn ein Gasaustritt in den Flüssigkeitsbehälter gewünscht wird, um den durch Zapfen von Getränk hervorgerufenen Druckabfall zu kompensieren, wird sie durch Betätigen des Anstechhebels bis in die Anstichstelle abgesenkt, wie in den Erläuterungen zu den Figuren 6 und 7 näher beschrieben.

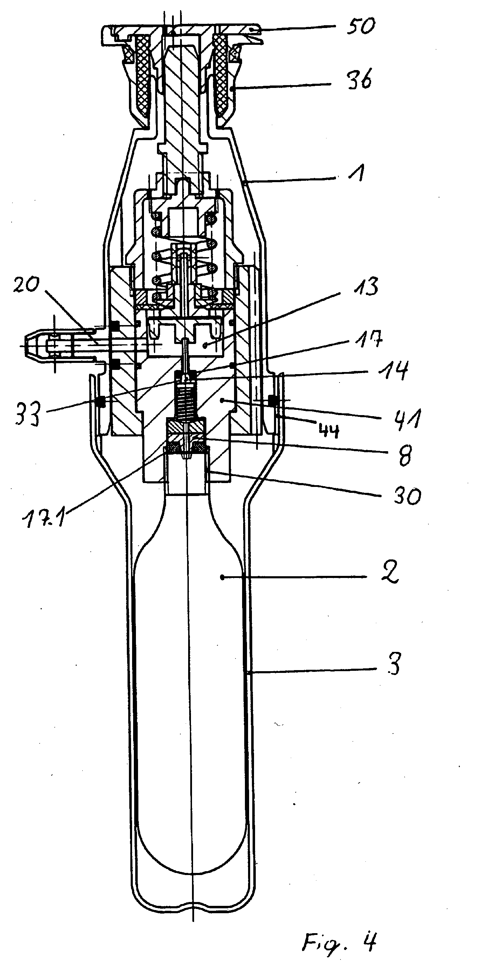

Figur 4 zeigt die in Figur 1 dargestellte Ventileinheit genauer in allen ihren Hauptbestandteilen. Man erkennt den Ventilhalter 1, der vom Belüftungsventilstopfen 36 umgriffen wird und kraftschlüssig oder über Einrastkrallen 44 mit einem Patronenhalter 3 verbunden ist, in den die Patrone 2 eingesetzt ist. Bei der Montage wird die Gaspatrone 2 mittels Gewinde 30 in den Metallkern 41 eingeschraubt und dabei von der Anstechspitze 8 der Ventileinheit angestochen. Das aus der Gaspatrone austretende Gas gelangt durch einen Kanal in der Anstechspitze in einen Druckraum 33, wird aber durch das Zusammenwirken des Ventilstößelkopfs 14 mit den Dicht- oder Sitzflächen 17 an einem Weiterströmen gehindert. Eine Dichtung 17.1 dichtet das Anstechloch und Anstechspitze gegen den Metallkern 41 und das Gewinde 30.

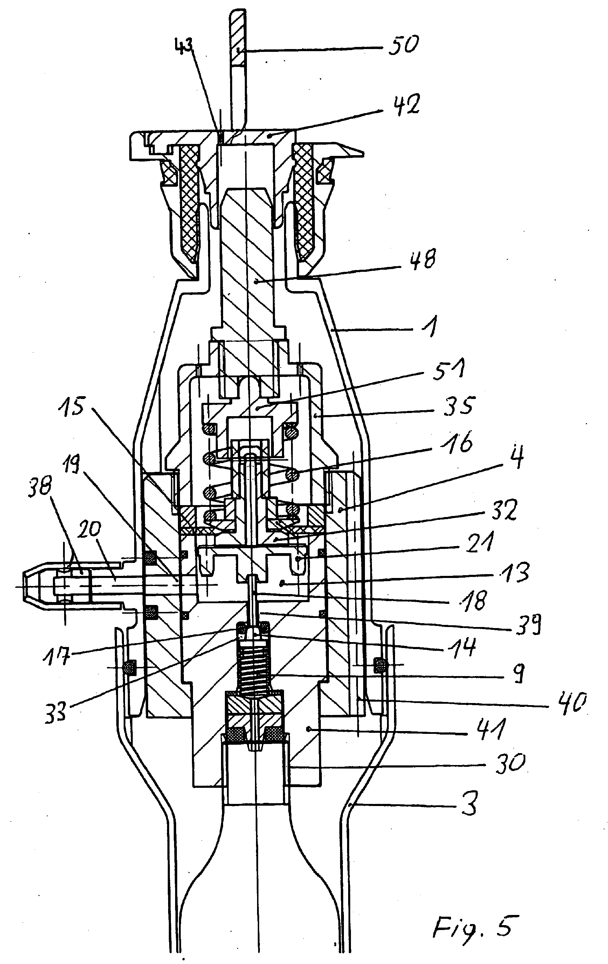

Durch die Betätigung der Anstechlasche 50 gelangt Gas vom Druckraum 33 in den Druckregulier-Raum 13, wie in Figur 5 im Einzelnen gezeigt ist. Die Anstechlasche 50 wird hierfür angehoben und gedreht; die Anstechschraube 48, die sich in reibschlüssiger Verbindung in einer inneren Ausnehmung des Drehdeckels 42 befindet, wird entsprechend mitgedreht. Ein Schraubgewinde 37, das sich im unteren Bereich der Anstechschraube auf deren Außenseite befindet, steht in Eingriff mit einem entsprechenden Gewindeteil im innenseitigen Halsbereich des Reglerverschlusses 35. Die Drehbewegung der Anstechlasche bewirkt daher gleichzeitig eine Axialbewegung der Anstechschraube 48 in Richtung der Gaspatrone. Das Gewinde kann hierfür beispielsweise eine solche Steigung aufweisen, dass der Drehdeckel 42 ca. 3 Umdrehungen benötigt, bis die Anstechschraube am Reglerverschluss 35 anschlägt. Im Inneren des Reglerverschlusses ist eine Druckfeder (Spiralfeder) 16 angeordnet, die ein Anlageelement 51 gegen die Anstechschraube 48 spannt. Schlägt die Anstechschraube am Reglerverschluss an, übt sie über das Anlageelement und die Druckfeder 16 eine erhöhte Kraft auf eine von einem Membranhalter 32 gehaltene Membranscheibe 15 auf. Der Membranhalter 32 drückt nach innen gegen einen Reglerteller 21, der den Druckregulierraum 13 nach oben hin begrenzt. Der Reglerteller überträgt den Druck auf ein Ventilelement aus Ventilstößel 18 und Ventilstößelkopf 14, der sich darauf hin in Axialrichtung von der Dichtung 17 nach unten wegbewegt. Dadurch kann Gas über einen durchgehenden Kanal 39 aus dem Druckraum 33 in den Druckregulierraum 13 gelangen.

Der Druckregulierraum 13 wird, wie erwähnt, nach oben hin vom Reglerteller 21 und im Übrigen vom Metallkern 41 und der Ventildichtung 14, 17 begrenzt. Um den Metallkern herum erstreckt sich das Innengehäuse 4, das seinerseits vom Ventilhalter 1 gehalten wird. Der Druckregulierraum 13 ist über seitliche durchgehende, fluchtende Öffnungen sowohl im Metallkern 41 als auch im Innengehäuse 4 und im Ventilhalter 1 mit dem Innenraum des Flüssigkeitsbehälters 11 verbunden. Um zu verhindern, dass bei ungünstigen Druckverhältnissen Gas oder Flüssigkeit aus dem Hauptraum des Flüssigkeitsgebindes in den Druckregulierraum 13 eindringen kann, ist die seitliche Öffnung im Ventilhalter 1 als Rückschlagventil 38 ausgestaltet.

Die erfindungsgemäße Ventileinheit ist wie oben erwähnt auf einen Druck (Vorspannung der Druckfeder 16) von ca. 1,0 bis 1,5 bar eingestellt. Ist dieser Druck erreicht, wird der Ventilstößelkopf 14 durch die Druckfeder 9 gegen den Druck der Druckfeder 16 geschlossen. Liegt der Behälterinnendruck bei über 1,0 bis 1,5 bar, bleibt das Rückschlagventil 38 geschlossen. Fällt der Behälterinnendruck auf unter diesen Wert, öffnet sich das Ventil, und es fließt Gas, z.B. CO₂, bis zum Druckausgleich nach.

In den Figuren 6 bis 8 sind die Einzelheiten einer spezifischen Ventileinheit gemäß Figur 2 mit Sicherheitsventil gezeigt; das mit dem Patronen- und Ventilhalter 1 verbundene Patronenschutzgehäuse 3 ist nur teilweise zu sehen. Mit Bezugszeichen 6 ist die Verbindung zwischen den beiden Teilen gekennzeichnet; diese kann beliebig ausgestaltet sein, z.B. als Schraubgewinde.

Die Ventileinheit besitzt in ihrem oberen Bereich außenseitig Mittel 7, mit denen der Patronen- und Ventilhalter 1 dichtend und festsitzend in der Öffnung des Flüssigkeitsbehälters gehalten werden kann. Im übrigen ist der Patronen- und Ventilhalter vorzugsweise im wesentlichen als durchgehendes Rohr mit kreisförmigem Querschnitt ausgestaltet, das eine seitliche Öffnung 20 aufweist, die mit einer Öffnung 19 des Innengehäuses 4 kommunizieren kann. Das Innengehäuse 4 ist gegenüber dem Patronen- und Ventilhalter 1 über ein Gewinde sowohl drehbar als auch in Axialrichtung verschiebbar befestigt. In seiner Ausgangsstellung, in der eine im Patronenschutzgehäuse befindliche Patrone noch nicht angestochen ist (siehe auch Figur 7), befindet es sich in einer solchen Stellung, dass die Öffnung 19 nicht mit der Öffnung 20 des Patronen- und Ventilhalters 1 in Verbindung steht. Dadurch kann vor der Inbetriebnahme keine Flüssigkeit in das Ventil eindringen. Die Befestigung des Innengehäuses 4 am Patronen- und Ventilhalter 1 ist derart, dass eine Drehbewegung gleichzeitig eine Verschiebung des Innengehäuses nach innen, in Richtung der Patronenspitze, bewirkt (siehe auch Figur 8). Mit Hilfe eines Griffs oder einer Lasche 5 auf der Außenseite der Ventileinheit lässt es sich von der Außenseite des Flüssigkeitsbehälters aus verdrehen, wobei die Anstechspitze 8, die mit Hilfe einer Anstechscheibe 29 und einem Gewindering 30 in seinem nach innen gerichteten Endbereich angeordnet ist, in Axialrichtung nach innen bewegt wird, bis sie die Patrone 2 ansticht.

Durch die Anstechspitze läuft ein Kanal, durch den Gas aus der Patrone in einen Raum 33 entweichen kann. Mit Hilfe einer Druckfeder 9 in diesem Raum wird ein Ventilstößel 14 gegen einen Ventilsitz 17 gespannt; dieses Ventil dichtet den Raum 33 gegen einen durchgehende Öffnung 19 ab, die mit einem Druckregulierraum 13 in Verbindung steht. Dieser wird seitlich vom Innengehäuse 4 begrenzt, hat aber über die Öffnung 19 eine Verbindung nach außen, die nach der Verschiebung des Innengehäuses 4 in Richtung der Patronenspitze mit der Öffnung 20 im Patronen- und Ventilhalter kommuniziert, so dass nach Anstechen der Patrone eine Verbindung des Druckregulierraums 13 mit dem Hauptraum des Flüssigkeitsbehälters besteht.

Der Druckregulierraum wird auf seiner der Ventileinheit 14, 17 gegenüberliegenden Seite, also nach außen hin, von einer Membranscheibe 15 begrenzt, die dichtend am Innengehäuse gehalten wird. Mittig wird sie von einem Membranhalter 32 gehalten, über den sie mittels einer von einem Reglerverschluss 35 gehaltenen Druckfeder 16 vorgespannt wird. Der Membranhalter 32 drückt nach innen gegen einen Reglerteller 21, der den Druck auf einen Ventilstößel 18 überträgt, die in einer Reglerhülse 31 angeordnet ist. Der Kolben 18 überträgt den Druck auf den Kopf 14 des Ventilstößels. Sinkt der Druck im Flüssigkeitsbehälter und damit im Druckregulierraum unter einen über die Druckfeder 16 einstellbaren Wert, dann sinkt die Gegenspannung, die die Membranscheibe in Richtung der Druckfeder 16 drückt, auf einen Wert, jenseits dessen der von der Druckfeder 16 ausgeübte Druck so hoch wird, dass der Kolben 18 den Kopf des Ventilstößels nach unten drückt und Gas aus dem Raum 33 entweichen kann, bis sich im Druckregulierraum 13 wieder ein Druck aufgebaut hat, der die Membranscheibe ausreichend weit gegen die Druckfeder 16 drückt, dass der Kolben 18 in seine Ausgangsstellung zurückkehrt.

Aus sicherheitstechnischen Erwägungen ist es bevorzugt, dass sich das Innengehäuse nach dem Anstechen der Patrone nicht mehr in die Ausgangsposition zurückbewegen lässt. Dies lässt sich dadurch erreichen, dass man im Innengehäuse einen gefederten Bolzen vorsieht, der in der Endlage in eine Bohrung im Ventilhalter 1 einrastet.

Allen Ausführungsformen der Erfindung ist gemeinsam, dass ein Sicherheitssystem vorgesehen sein kann, das verhindert, dass der Druck im Druckregulierraum 13, z.B. aufgrund einer Fehlfunktion des Reduzierventils, über einen vorbestimmten Wert steigen kann. Hierfür befindet sich im Membranhalter 32 eine Bohrung 52, die sich innerhalb des Innenraums der Druckfeder 16 erstreckt. Der Membranhalter 32 besitzt fluchtend zum rohrförmigen, gebohrten Innenraum 52 eine Öffnung, die über geringdimensionierte Querbohrungen 25, die zwischen dem Membranhalter und dem Reglerteller 21 angeordnet oder als Ausnehmungen im Membranhalter gestaltet sind, mit dem Druckregulierraum 13 in Verbindung steht. In der Seitenwand des Membranhalters 32 sind nahe seinem äußeren Ende kleine Öffnungen 24 angebracht. Ein Überdruckschlauchstück 23 ist über dieses Ende bis über die Öffnungen geschoben und dichtet diese bei den vorgesehenen Arbeitsdrücken ab. Steigt der Druck im Druckregulierraum 13 zu stark an, steigt der Gasdruck auch im Innenraum der Hülse; das Gas drückt gegen die Wandung des Kunststoffröhrchens und bewirkt, dass sich ein Schlitz zwischen Hülse und Röhrchen bildet, durch den das Gas in die im Regulierverschluss 35 gebildete Federkammer der Feder 16 entweichen kann. Von dort gelangt sie über Bohrungen im Regulierverschluss 35 aus diesem heraus. Bei Ausgestaltungen, in denen die Ventileinheit über zusätzliche Mittel wie den Belüftungsventilstopfen 36 im Deckel des Flüssigkeitsbehälters befestigt ist, müssen diese Mittel dann natürlich mit Bohrungen oder Kanälen ausgestattet sein, die ein Ablassen des Überdrucks aus der erfindungsgemäßen Ventileinheit ermöglichen. Solche Belüftungsbohrungen sind in den beigefügten Figuren mit 43 bezeichnet.

In der zweiten Ausführungsform der Erfindung, wie sie z.B. in Fig. 2 dargestellt ist, kann auch ein unerwünschter Überdruck im Innenraum des Flüssigkeitsbehälters mit diesem Sicherheitssystem abgelassen werden. In Ausgestaltungen mit einem Rückschlagventil zwischen dem Druckregulierraum 13 und dem Hauptraum des Flüssigkeitsbehälters kann ein solcher Überdruck im Behälter selbst gar nicht erst entstehen.

Zusätzlich kann ein zweites Sicherheitssystem zur Vorbeugung gegen das Enstehen von zu hohem Druck bei Dichtungsproblemen an der Anstechspitze 8, z.B. im Bereich des Gewindes 30, vorgesehen sein. Ein solches System ist in Fig. 5 dargestellt. In der Ausgestaltung dieser Figur würde Gas, das über das Gewinde 30 austritt, in den Raum zwischen Gaspatrone und Patronenschutzgehäuse 3 gelangen. Ein Sicherheitskanal 40 im Innenbehälter 4 und ggf. Bohrungen 43 im Drehdeckel 42 leiten einen entsprechend sich möglicherweise aufbauenden Druck nach außen. In anderen Ausgestaltungen, beispielsweise der Ventileinheit gemäß den Figuren 2, 3 und 6 bis 8, müssten entsprechende Kanäle vorgesehen sein, im Falle dieser Ausgestaltung beispielsweise im Patronenschutzgehäuse 3, im Ventilhalter 1 und ggf. im Innengehäuse 4 des Ventilhalters. Durch das zusätzliche Sicherheitssystem kann kein erhöhter Druck im Flüssigkeitsbehälter entstehen.

Das erfindungsgemäße Ventil kann beispielsweise bei folgenden Drücken betrieben werden: Anfangsdruck in der Gaspatrone: ca. 60 Bar. Druck im Druckregulierungsraum: 1 bis 3 Bar; Auslösung des Sicherheitsventils bei mehr als 3 Bar Überdruck.

### Bezugszeichenliste

- 1: Ventilhalter
- 2: Patrone
- 3: Patronenschutzgehäuse
- 4: Innengehäuse
- 5: Anstechhebel
- 6: Schraubgewinde Ventilhalter/Patronenhalter
- 7: Äußeres Dichtungsmittel
- 8: Anstechspitze
- 9: Druckfeder
- 10: Öffnung im Behälterdeckel
- 11: Flüssigkeitsbehälter
- 13: Druckregulierraum
- 14: Ventilstößelkopf
- 15: Membranscheibe
- 16: Druckfeder
- 17: Dichtfläche für Ventilstößel
- 17.1: Dichtung
- 18: Ventilstößel
- 19: seitliche Öffnung im Innengehäuse
- 20: seitliche Öffnung im Ventilhalter
- 21: Reglerteller
- 23: Überdruckschlauch
- 24: Öffnungen
- 25: Querbohrung
- 26: Ventileinheit
- 27: Zapfhahn
- 28: Steigrohr
- 29: Anstechscheibe
- 30: Gewindering
- 31: Reglerhülse
- 32: Membranhalter
- 33: Druckraum
- 34: Sicherheitsventil
- 35: Reglerverschluss
- 36: Ventilstopfen
- 37: Schraubgewinde
- 38: Rückschlagventil
- 39: durchgehender Kanal
- 40: Sicherheitskanal
- 41: Metallkern
- 42: Drehdeckel
- 43: Entlüftungsbohrung
- 44: Einrastkrallen
- 48: Anstechschraube
- 49: Dichtungsring
- 50: Anstechlasche
- 51: Anlageelement
- 52: Bohrung

## Patentansprüche

1. Ventileinheit (26) mit
- einem Patronen- und Ventilhalter (1), der Mittel (6) zum Verbinden mit einem Patronenschutzgehäuse (3), Mittel (7; 36,49) zur dichtenden Befestigung in einer dafür vorgesehene Öffnung (10) in einem Flüssigkeitsbehälter (11) sowie eine seitliche, durchgehende Öffnung (20) aufweist,
- einem Innengehäuse (4), das im Patronen- und Ventilhalter (1) gelagert ist, wobei sich im Innengehäuse (4) an dessen dem Patronenschutzgehäuse (3) zugewandten Ende
- eine Anstechspitze (8) und
- eine Druckminderventileinheit (13, 14, 15, 16 17, 18) befindet, wobei die Druckminderventileinheit einen
- Druckregulierraum (13) aufweist,
wobei der Druckregulierraum (13) über eine durchgehende Öffnung (19) im Innengehäuse (4) und die seitliche, durchgehende Öffnung (20) im Patronen-und Ventilhalter (1) eine durch ein Rückschlagventil geschützte oder absperrbare Verbindung mit dem Inneren des Flüssigkeitsbehälters (11) besitzt.

2. Ventileinheit nach Anspruch 1, **dadurch gekennzeichnet, dass** das
Innengehäuse (4) einen Metallkern (41) mit einem Gewinde (30) aufweist, in den eine im Patronenschutzgehäuse (3) vorhandene Gaspatrone (2) so weit eingeschraubt werden kann, dass die Anstechspitze (8) die Gaspatrone ansticht.

3. Ventileinheit nach Anspruch 2, worin der Druckregulierraum (13) in Axialrichtung gesehen begrenzt wird:
- in Richtung des Patronenschutzgehäuses (3) von einem Ventilstößelkopf (14), dessen Oberseite unter Ausbildung eines Ventils mit einer ringförmigen Dichtfläche (17) zum Dichten des Druckregulierraums (13) gegen den Druck zusammenwirkt, der in der Anstechspitze herrscht, sowie von der Oberseite des Metallkerns (41),
- auf der gegenüberliegenden Seite von einer Membran (15), die durch eine Feder (16) gegen den Druckregulierraum (13) vorgespannt ist.

4. Ventileinheit nach Anspruch 3, bei der von außen ein erhöhter Druck auf die Feder (16) aufgebracht werden kann, derart, dass dann, wenn der Druck im Druckregulierraum (13) unter einen vorbestimmten Wert abgefallen ist, ein mit der Membran (15) in Verbindung stehendes Element (18) gegen das Ventil (14,17) drückt und es öffnet, bis soviel Gas in den Druckregulierraum geströmt ist, dass der Druck darin wieder über diesen Wert angestiegen ist.

5. Ventileinheit nach Anspruch 4, worin der erhöhte Druck **dadurch** auf die Feder (16) aufgebracht wird, dass ein außenseitig befindlicher Drehdeckel (5, 42), der ein axiales Verschieben einer Anstechschraube (48) in Richtung des Patronenschutzgehäuses bewirkt, bis zu einer Stellung gedreht wird, in der die Anstechschraube direkt oder über ein Zwischen element (35) auf die Feder (16) drückt.

6. Ventileinheit (26) nach Anspruch 1, mit
- einem Patronen- und Ventilhalter (1), der Mittel (6) zum Verbinden mit einem Patronenschutzgehäuse (3), Mittel (7) zur dichtenden Befestigung in einer dafür vorgesehene Öffnung (10) in einem Flüssigkeitsbehälter (11) sowie eine seitliche, durchgehende Öffnung (20) aufweist,
- einem Innengehäuse (4), das drehbar im Patronen- und Ventilhalter (1) gelagert ist, derart, dass eine Drehbewegung des Innengehäuses (4) gegen den Patronen- und Ventilhalter (1) zu einer axialen Bewegung des Innengehäuses (4) in Richtung des Patronenschutzgehäuses (3) und damit ggf. der Mündung (12) einer Patrone (2) führt,
wobei sich im Innengehäuse (4) an dessen dem Patronenschutzgehäuse (3) zugewandten Ende
- eine Anstechspitze (8) und
- eine Druckminderventileinheit (13, 14, 15, 16 17, 18) befindet, die jeweils fest mit dem Innengehäuse (4) verbunden sind, wobei die Druckminderventileinheit einen
- Druckregulierraum (13) aufweist,
wobei der Druckregulierraum (13) mit einer durchgehenden Öffnung (19) im Innengehäuse (4) in Verbindung steht, die derart angebracht ist, dass sie in der Ausgangsstellung des Patronen- und Ventilhalters (1) gegen einen geschlossenen Wandteil desselben (1') endet, während sie zumindest teilweise mit der Öffnung (20) im Patronen- und Ventilhalter in Verbindung steht, wenn das Innengehäuse (4) axial soweit bewegt wurde, dass die Anstechspitze (8) eine ggf. vorhandene Patrone angestochen hat.

7. Ventileinheit nach Anspruch 6, **dadurch gekennzeichnet, dass** sich das Innengehäuse (4) von einem Anstechhebel (5) , der an einem aus dem Flüssigkeitsbehälter nach außen weisenden Teil der Ventileinheit angebracht ist, drehen und damit axial verschieben lässt.

8. Ventileinheit nach Anspruch 6 oder 7, worin der Druckregulierraum (13) in Axialrichtung gesehen begrenzt wird:
- in Richtung des Patronenschutzgehäuses von einem Ventilstößelkopf (14), dessen Oberseite unter Ausbildung eines Ventils mit einer ringförmigen Dichtfläche (17) zum Dichten des Druckregulierraums (13) gegen den Druck zusammenwirkt, der in der Anstechspitze (8) herrscht, und
- auf der gegenüberliegenden Seite von einer Membran (15), die durch eine Feder (16) auf einen vorgegebenen Wert gegen den Druckregulierraum (13) vorgespannt ist, derart, dass dann, wenn der Druck im Druckregulierraum (13) unter einen vorbestimmten Wert abgefallen ist, ein mit der Membran (15) in Verbindung stehendes Element (18) gegen das Ventil (14, 17) drückt und es öffnet, bis soviel Gas in den Druckregulierraum geströmt ist, dass der Druck darin wieder angestiegen ist.

9. Ventileinheit nach Anspruch 4 oder 8, worin der von der Membran (15) in Richtung des Patronenhalters wirkende Druck über einen Reglerteller (21) auf einen Ventilstößel (18) übertragen wird, der gegen den Ventilstößelkopf (14) drückt, wobei der Ventilstößelkopf (14) von einer zweiten Feder (9) gegen die Dichtfläche (17) vorgespannt ist.

10. Ventileinheit nach einem der voranstehenden Ansprüche, weiterhin umfassend ein Sicherheitsventil (34), das so angebracht ist, dass Gas aus dem Druckregulierraum (13) ins Freie entweichen kann, wenn der Druck in diesem Raum einen vorgegebenen Wert übersteigt.

11. Ventileinheit nach Anspruch 10, worin das Sicherheitsventil eine kolbenartige Verlängerung im Membranhalter (32) mit einer auf der der Membran abgewandten Stirnseite geschlossenen, zentrischen Bohrung (52), die seitlich in der Nähe dieser Stirnseite Öffnungen (24) aufweist, sowie einen flexiblen Schlauch (23) umfasst, der die kolbenartige Verlängerung des Membranhalters im Bereich der seitlichen Öffnungen abdeckt, wobei das Element über geringdimensionierte Öffnungen (25) mit dem Druckregulierraum (13) in Verbindung steht.

12. Ventileinheit nach Anspruch 5, worin sich der Drehdeckel (50, 42) außenseitig an einem Ventil- und Belüftungsstopfen (36) befindet, der dichtend (49) in der Öffnung (10) des Flüssigkeitsbehälters (11) eingesetzt ist.

13. Ventileinheit nach Anspruch 12, worin der Ventil- und Belüftungsstopfen weiterhin Mittel zum Ablassen von Überdruck, vorzugsweise in Gestalt von einer oder mehreren Entlüftungsbohrungen (43) aufweist.

14. Ventileinheit nach einem der Ansprüche 6 bis 8, worin Mittel zum Arretieren des Innengehäuses (4) in der Stellung vorgesehen sind, in der es axial soweit in Richtung des Patronenschutzgehäuses verschoben wurde, dass die Anstechspitze (8) eine ggf. vorhandene Patrone angestochen hat.

15. Ventileinheit nach einem der voranstehenden Ansprüche, umfassend ein Gewinde (6) zum Verbinden der Ventileinheit (1) mit einem Patronenschutzgehäuse (3).

16. Ventileinheit nach einem der voranstehenden Ansprüche, weiterhin umfassend ein Patronenschutzgehäuse (3).

17. Ventileinheit nach einem der Ansprüche 1 bis 14 und 16, worin die Ventileinheit (1) kraftschlüssig oder über Einrastkrallen (44) mit einem Patronenschutzgehäuse (3) verbunden werden kann oder mit diesem verbunden ist

18. Ventileinheit nach einem der Ansprüche 5 oder 7, weiterhin umfassend eine durch die Kraft einer Hand irreversibel zerstörbare Sicherung, die den Anstechhebel (5) oder die Anstechlasche (50) so überspannt, dass diese(r) nicht ohne Zerstörung der Sicherung betätigt werden kann.

## Claims

1. Valve unit (26), comprising:
- a cartridge and valve supporting means (1), said means comprising
- means (6) for connection with a cartridge protective housing (3),
- means (7; 36,49) for providing a sealing attachment into an opening (10) of a fluid container (11) designated for this and
- a lateral end-to-end opening (20), and
- an inner housing (4) being supported in said cartridge and valve supporting means (1),
wherein
a tapping tip (8) and
a pressure reducing valve unit (13, 14, 15, 16, 17, 18) are provided within said inner housing (4) on its cartridge protective housing end,
wherein the pressure reducing valve unit (13) comprises a pressure adjusting chamber (13), which pressure adjusting chamber (13) is in communication with the inside of the fluid container (11) via an end-to-end opening (19) in said inner housing (4) and said lateral end-to-end opening (20) in said cartridge and valve supporting means (1), which communication is protected or sealable by a check valve unit.

2. Valve unit according to claim 1, wherein said inner housing (4) comprises a metal core (41) comprising a screw thread (30), into which screw thread (30) a gas cartridge (2) provided within the cartridge protective housing (3) can be screwed, such that said tapping tip (8) can tap the gas cartridge.

3. Valve unit according to claim 2, wherein said said pressure adjusting chamber (13) is axially defined by:
- a tappet head (14) on the side of the said cartridge protective housing (3), the upper side of said tappet head cooperating with an annular sealing face (17) for sealing the pressure adjusting chamber (13) against the pressure existing in the tapping tip, as well as by the upper side of said metal core (41),
- a membrane (15) on the opposing side, which membrane (15) is biased against the pressure adjusting chamber (13) by a spring (16).

4. Valve unit according to claim 3, wherein from the outside an increased pressure can be applied to said spring (16) in such a manner, that when the pressure within the pressure adjusting chamber (13) has decreased under a predetermined value, an element (18) connected with said membrane (15) acts against and opens said valve (14, 17), until a sufficient amount of gas has entered the pressure adjusting chamber for rising up the pressure over said predetermined value.

5. Valve unit according to claim 4, wherein the increased pressure is applicable on said spring (16) by turning a cap (5, 42) provided on the outside and effecting an axial movement of a tapping screw (48) in the direction of the cartridge protective housing into a position, in which said tapping screw directly or via an intermediate member (35) acts against said spring (16).

6. Valve unit (26) according to claim 1, comprising:
- a cartridge and valve supporting means (1), comprising
- means (6) for connection with a cartridge protecting housing (3),
- means (7) for providing a sealing attachment into an opening (10) of a fluid container (11) and
- a lateral end-to-end opening (20), and
- an inner housing (4), being supported in said cartridge and valve supporting means (1), such that turning of said inner housing (4) in relation to said cartridge and valve supporting means (1) effects an axial movement of said inner housing (4) into the direction of said cartridge protective housing (3) and thus, as the case may be, of an opening (12) of a cartridge (2),
wherein
- a tapping tip (8) and
- a pressure reducing valve unit (13, 14, 15, 16, 17, 18) are provided within said inner housing (4) on its cartridge protective housing (3) end, which in each case are rigidly attached to said inner housing, wherein said pressure reducing valve unit comprises a pressure reducing chamber (13),
wherein said pressure reducing chamber (13) is in communication with an end-to-end opening (19) of said inner housing (4), provided in such a manner, that said opening (19) ends against a closed part of the wall of the cartridge and valve supporting means in the initial position, while being at least partly in communication with said opening (20) of said cartridge and valve supporting means when the inner housing (4) has been moved axially such that the tapping tip (8) has tapped a present cartridge.

7. Valve unit according to claim 6, wherein said inner housing (4) is turnable and thus axially movable by a tapping lever (5), which is provided on a part of said valve unit directed to the outside of said fluid container.

8. Valve unit according to claim 6 or 7, wherein said pressure adjusting chamber (13) is axially defined by:
- a tappet head (14) on the side of the said cartridge protective housing (3), the upper side of which cooperating with an annular sealing face (17) for sealing the pressure adjusting chamber (13) against the pressure existing in the tapping tip, thereby providing a valve and
- a membrane (15) on the opposing side, which is biased onto a predetermined value against the pressure adjusting chamber (13) by a spring (16), such that, if the pressure in said pressure adjusting chamber (13) has decreased under a predetermined value, an element (18) connected with said membrane (15) acts against and opens said valve (14, 17), until a sufficient amount of gas has entered the pressure adjusting chamber for increasing the pressure in said pressure adjusting chamber.

9. Valve unit according to claim 4 or 8, wherein the pressure acting from said membrane (15) in the direction of the cartridge supporting means is transferred via a controlling disc (21) onto a tapped (18), which acts against said tappet head (14), wherein said tappet head (14) is biased against said sealing surface (17) by a second spring.

10. Valve unit according to one of the preceding claims, further comprising a safety valve (34), which is provided in such a manner, that gas can escape from the pressure adjusting chamber (13) into the surrounding atmosphere, when the pressure in said pressure adjusting chamber exceeds a predetermined value.

11. Valve unit according to claim 10, wherein the safety valve comprises a piston like extension in the membrane holding means (32) said extension comprising a central bore (52) which is closed on the membrane-far front end and comprises lateral openings (24) near to said front end, as well as a flexible hose (23), which hose (23) covers the piston like extension of the membrane supporting means in the area of said lateral openings, wherein the element is in communication with the pressure adjusting chamber (13) via openings (25) of small size.

12. Valve unit according to claim 5, wherein said turning cap (50, 42) is provided on the outside on a valve/ventilation plug (36), which is inserted in a sealing manner (49) within the opening (10) of said fluid container (11).

13. Valve unit according to claim 12, wherein said valve/ventilation plug further comprises means for discharging overpressure, preferably in form of one or more ventilation bores (43).

14. Valve unit according to one of the claims 6 to 8, wherein there are provided means for locking said inner housing (4) in that position, in which it is disposed axially into the direction of the cartridge protective housing for such an extend, that said tapping tip (8) has tapped an optionally existing cartridge.

15. Valve unit according to one of the preceding claims, comprising a screw thread (6) for connection of said valve unit (1) with a cartridge protective housing (3).

16. Valve unit according to one of the preceding claims, further comprising a cartridge protective housing (3).

17. Valve unit according to one of the claims 1 to 14 and 16, wherein said valve unit 1 is connected or is connectable with a cartridge protective housing (3) by force fit or claw fasteners (44).

18. Valve unit according to claim 5 or 7, further comprising a securing device, which is irreversible destroyable manually and which covers the tapping lever (5) or the tapping strap (50) in such a manner, that it can not be operated without destroying said securing device.

## Revendications

1. Unité de soupape (26) comportant
- un support de cartouche et de soupape (1) qui présente un moyen (6) pour se raccorder à un boîtier protecteur de cartouche (3), un moyen (7 ; 36, 49) pour une fixation étanche dans une ouverture (10) prévue à cet effet dans un récipient de liquide (11) ainsi qu'une ouverture latérale traversante (20),
- un boîtier interne (4) qui est monté dans le support de cartouche et de soupape (1), lequel boîtier interne (4) présente à son extrémité tournée vers le boîtier protecteur de cartouche (3)
- une pointe de perçage (8) et
- une unité de soupape de détente (13, 14, 15, 16, 17, 18), l'unité de soupape de détente présentant
- une chambre de régulation de pression (13),
laquelle chambre de régulation de pression (13) possède, par le biais d'une ouverture traversante (19) dans le boîtier interne (4) et l'ouverture latérale traversante (20) dans le support de cartouche et de soupape (1), un raccord protégé ou verrouillable par un clapet anti-retour avec l'intérieur du récipient de liquide (11).

2. Unité de soupape selon la revendication 1, **caractérisée en ce que** le boîtier interne (4) présente un noyau métallique (41) avec un filetage (30), dans lequel une cartouche de gaz (2), présente dans le boîtier protecteur de cartouche (3), peut être vissée jusqu'à ce que la pointe de perçage (8) perce la cartouche de gaz.

3. Unité de soupape selon la revendication 2, dans laquelle la chambre de régulation de pression (13) est limitée suivant la direction axiale :
- en direction du boîtier protecteur de cartouche (3), par une tête de poussoir de soupape (14), dont la face supérieure interagit, en formant une soupape avec une surface d'étanchéité annulaire (17) pour étancher la chambre de régulation de pression (13), contre la pression qui règne dans la pointe de perçage, ainsi que par la face supérieure du noyau métallique (41),
- sur la face opposée, par une membrane (15) qui est précontrainte par un ressort (16) contre la chambre de régulation de pression (13).

4. Unité de soupape selon la revendication 3, dans laquelle une pression accrue peut être appliquée de l'extérieur sur le ressort (16), de sorte que, lorsque la pression dans la chambre de régulation de pression (13) est tombée en dessous d'une valeur prédéterminée, un élément (18) en liaison avec la membrane (15) exerce une pression contre la soupape (14, 17) et l'ouvre jusqu'à ce que suffisamment de gaz se soit écoulé dans la chambre de régulation de pression pour que la pression qui y règne augmente à nouveau au-dessus de cette valeur.

5. Unité de soupape selon la revendication 4, dans laquelle la pression accrue est appliquée sur le ressort (16) en faisant tourner un couvercle rotatif (5, 42) se trouvant à l'extérieur et qui provoque un déplacement axial d'une vis de perçage (48) dans la direction du boîtier protecteur de cartouche, jusque dans une position, dans laquelle la vis de perçage exerce sur le ressort (16) une pression de manière directe ou par le biais d'un élément intermédiaire (35).

6. Unité de soupape (26) selon la revendication 1, comportant
- un support de cartouche et de soupape (1), qui présente un moyen (6) pour se raccorder à un boîtier protecteur de cartouche (3), un moyen (7) pour la fixation étanche dans une ouverture (10) prévue à cet effet dans un récipient de liquide (11) ainsi qu'une ouverture latérale traversante (20),
- un boîtier interne (4) qui est monté à rotation dans le support de cartouche et de soupape (1), de sorte qu'un mouvement de rotation du boîtier interne (4) à l'encontre du support de cartouche et de soupape (1) provoque un mouvement axial du boîtier interne (4) dans la direction du boîtier protecteur de cartouche (3) et donc, le cas échéant, de l'embouchure (12) d'une cartouche (2),
lequel boîtier interne (4) contient à son extrémité tournée vers le boîtier protecteur de cartouche (3)
- une pointe de perçage (8) et
- une unité de soupape de détente (13, 14, 15, 16, 17, 18) qui est respectivement raccordée de manière fixe au boîtier interne (4), laquelle unité de soupape de détente présente
- une chambre de régulation de pression (13), laquelle chambre de régulation de pression (13) est reliée à une ouverture traversante (19) dans le boîtier interne (4), qui est agencée de manière à se terminer, au niveau de la position de départ du support de cartouche et de soupape (1), contre une partie de paroi fermée de ce dernier (1'), tandis qu'elle est au moins partiellement reliée à l'ouverture (20) dans le support de cartouche et de soupape, si le boîtier interne (4) a été déplacé suffisamment de manière axiale pour que la pointe de perçage (8) ait percé une cartouche éventuellement présente.

7. Unité de soupape selon la revendication 6, **caractérisée en ce que** le boîtier interne (4) peut être soumis à une rotation en sorte de se déplacer axialement à l'aide d'un levier de perçage (5), qui est agencé sur une partie de l'unité de soupape orientée du récipient de liquide vers l'extérieur et donc se déplacer axialement.

8. Unité de soupape selon la revendication 6 ou 7, dans laquelle la chambre de régulation de pression (13) est limitée en suivant dans la direction axiale :
- en direction du boîtier protecteur de cartouche, par une tête de poussoir de soupape (14), dont la face supérieure interagit, en formant une soupape avec une surface d'étanchéité annulaire (17) pour étancher la chambre de régulation de pression (13), contre la pression qui règne dans la pointe de perçage (8), et
- sur la face opposée, par une membrane (15) qui est précontrainte, à une valeur prédéfinie, par un ressort (16) contre la chambre de régulation de pression (13), de sorte que, lorsque la pression dans la chambre de régulation (13) est tombée en dessous d'une valeur prédéterminée, un élément (18) en liaison avec la membrane (15) exerce une pression contre la soupape (14, 17) et l'ouvre jusqu'à ce que suffisamment de gaz se soit écoulé dans la chambre de régulation de pression pour que la pression y augmente à nouveau.

9. Unité de soupape selon la revendication 4 ou 8, dans laquelle la pression exercée par la membrane (15) dans la direction du support de cartouche est transmise, par le biais d'un disque de régulation (21), à un poussoir de soupape (18) qui exerce une pression contre la tête de poussoir de soupape (14), la tête de poussoir de soupape (14) étant précontrainte par un second ressort (9) contre la surface d'étanchéité (17).

10. Unité de soupape selon l'une quelconque des revendications précédentes, comprenant en outre une soupape de sécurité (34), qui est agencée de sorte que du gaz puisse s'échapper de la chambre de régulation de pression (13) vers l'extérieur, lorsque la pression dans cette chambre dépasse une valeur prédéfinie.

11. Unité de soupape selon la revendication 10, dans laquelle la soupape de sécurité comprend un prolongement en forme de piston dans le support de membrane (32) avec un alésage central (52) fermé sur la face frontale opposée à la membrane, qui présente latéralement des ouvertures (24) à proximité de cette face frontale, ainsi qu'un tuyau flexible (23), qui recouvre le prolongement en forme de piston du support de membrane dans la zone des ouvertures latérales, l'élément étant relié à la chambre de régulation de pression (13) par des ouvertures de petites dimensions (25).

12. Unité de soupape selon la revendication 5, dans laquelle le couvercle rotatif (50, 42) se trouve à l'extérieur sur un bouchon de soupape et d'aération (36), qui est inséré de manière étanche (49) dans l'ouverture (10) du récipient de liquide (11).

13. Unité de soupape selon la revendication 12, dans laquelle le bouchon de soupape et d'aération présente par ailleurs un moyen pour évacuer une surpression, de préférence sous la forme d'un ou plusieurs orifices d'évacuation d'air (43).

14. Unité de soupape selon l'une quelconque des revendications 6 à 8, dans laquelle on prévoit un moyen pour bloquer le boîtier interne (4) dans une position, dans laquelle il a été suffisamment déplacé de manière axiale dans la direction du boîtier protecteur de cartouche pour que la pointe de perçage (8) ait percé une cartouche éventuellement présente.

15. Unité de soupape selon l'une quelconque des revendications précédentes, comprenant un filetage (6) permettant de raccorder l'unité de soupape (1) à un boîtier protecteur de cartouche (3).

16. Unité de soupape selon l'une quelconque des revendications précédentes, comprenant en outre un boîtier protecteur de cartouche (3).

17. Unité de soupape selon l'une quelconque des revendications 1 à 14 et 16, qui peut être raccordée, ou est raccordée, par friction ou par le biais de griffes d'encliquetage (44), à un boîtier protecteur de cartouche (3).

18. Unité de soupape selon l'une quelconque des revendications 5 ou 7, comprenant en outre une sécurité qui peut être détruite de manière irréversible par la force d'une main, laquelle sécurité tend au maximum le levier de perçage (5) ou la languette de perçage (50), de sorte que celui-ci (celle-ci) ne puisse être commandé(e) sans destruction de la sécurité.
